# NEUE EUROPÄISCHE PATENTSCHRIFT

(11) **EP 1 315 778 B2**
(45) Veröffentlichungstag und Bekanntmachung des Hinweises auf die Entscheidung über den Einspruch: **16.11.2011**
(45) Hinweis auf die Patenterteilung: 28.02.2007
(21) Anmeldenummer: 01976182.4
(22) Anmeldetag: 04.09.2001
(51) Int. Cl.: C09D 5/02, B05D 7/00, C09D 151/08, C09D 175/00

(54) **VERFAHREN ZUR HERSTELLUNG FARB- UND/ODER EFFEKTGEBENDER LACKIERUNGEN**
METHOD FOR PRODUCING COLOR GIVING AND/OR EFFECT GIVING LACQUER COATINGS
PROCEDE DE FABRICATION D'UNE COUCHE DE VERNIS CONFERANT UNE COULEUR ET/OU UN EFFET

(30) Priorität: 04.09.2000 DE 10043405
(43) Veröffentlichungstag der Anmeldung: 04.06.2003
(73) Patentinhaber: BASF Coatings GmbH, 48165 Münster (DE)
(72) Erfinder: WEGNER, Egon, 97209 Veitshöchheim (DE); LÜER, Ingo, 97276 Margetshöchheim (DE); SCHWARTE, Stephan, 48282 Emsdetten (DE); JANSING, Frank, Shanghai 200002 (CN)
(74) Vertreter: Leifert & Steffan
(86) Internationale Anmeldenummer: PCT/EP2001/010145
(87) Internationale Veröffentlichungsnummer: WO 2002/020672

(56) Entgegenhaltungen:
- EP-A- 0 313 951
- DE-A- 3 522 464
- DE-A- 3 903 704
- DE-A1- 4 110 520
- US-A- 5 747 582

## Beschreibung

Die vorliegende Erfindung betrifft ein neues Verfahren zur Herstellung farb- und/oder effektgebender Lackierungen.

Verfahren zur Herstellung farb- und/oder effektgebender Lackierungen aus farb- und/oder effektgebenden Wasserbasislacken und wäßrigen Unidecklacken, sowie die entsprechenden Wasserbasislacke und wäßrigen Unidecklacke sind aus den Patentanmeldungen EP 0 089 497 A 1, EP 0 256 540 A 1, EP 0 260 447 A 1, EP 0 297 576 A 1, WO 96/12747, EP 0 523 610 A 1, EP 0 228 003 A 1, EP 0 397 806 A 1, EP 0 574 417 A 1, EP 0 531 510 A 1, EP 0 581 211 A 1, EP 0 708 788 A 1, EP 0 593 454 A 1, DE-A-43 28 092 A 1, EP 0 299 148 A 1, EP 0 394 737 A 1, EP 0 590 484 A 1, EP 0 234 362 A 1, EP 0 234 361 A 1, EP 0 543 817 A 1, WO 95/14721, EP 0 521 928 A 1, EP 0 522 420 A 1, EP 0 522 419 A 1, EP 0 649 865 A 1, EP 0 536 712 A 1, EP 0 596 460 A 1, EP 0 596 461 A 1, EP 0 584 818 A 1, EP 0 669 356 A 1, EP 0 634 431 A 1, EP 0 678 536 A 1, EP 0 354 261 A 1, EP 0 424 705 A 1, WO 97/49745, WO 97/49747, EP 0 401 565 A 1, EP 0 496 205 A 1, EP 0 358 979 A 1, EP 469 389 A 1, DE 24 46 442 A 1, DE 34 09 080 A 1, DE 195 47 944 A 1, DE 197 41 554.7 A 1 oder EP 0 817 684, Spalte 5, Zeilen 31 bis 45, bekannt.

Die bekannten Wasserbasislacke und wäßrigen Unidecklacke liefern farb- und/oder effektgebende Mehrschichtlackierungen und Unidecklackierungen von hervorragender optischer Qualität und weisen eine ausgezeichnete Zwischenschichthaftung auf.

Üblicherweise sind die Wasserbasislackierungen in den farb- und/oder effektgebenden Mehrschichtlackierungen 7 bis 20 µm dick. In vielen Fällen wäre es wünschenswert, die Wasserbasislackierungen in höheren Schichtdicken zu applizieren, um spezielle optische Effekte zu realisieren. Indes neigen die Wasserbasislackierungen dann zur Bildung von Kochern, die sich optisch ausgesprochen störend bemerkbar machen und den Eindruck einer minderwertigen Lackierung vermitteln. Gleiches gilt bei der Anwendung der bekannten wäßrigen Lacke als Unidecklacke.

Aufgabe der vorliegenden Erfindung ist es, ein neues Verfahren zur Herstellung von farb- und/oder effektgebender Lackierungen zu finden, das die Nachteile des Standes der Technik nicht mehr länger aufweist, sondern das mindestens unter Erhalt - wenn nicht gar unter Verbesserung - des bisher erreichten Eigenschaftsprofils der farb- und/oder effektgebender Lackierungen die Herstellung kocherfreier Wasserbasislackierungen und Unidecklackierungen auch in höheren Schichtdicken ermöglicht.

Demgemäß wurde das neue Verfahren zur Herstellung einer farb- und/oder effektgebenden Lackierung auf einem grundierten oder ungrundierten Substrat durch
(I) Applikation mindestens eines farb- und/oder effektgebenden, wäßrigen Unidecklacks auf das Substrat, wodurch mindestens eine Unidecklackschicht resultiert, und
(II) Härtung der wäßrigen Unidecklackschicht, wodurch eine farb- und/oder effektgebende Unidecklackierung resultiert;
oder alternativ durch
(I) Applikation mindestens eines farb- und/oder effektgebenden Wasserbasislacks auf das Substrat, wodurch mindestens eine wäßrige Wasserbasislackschicht resultiert,
(II) Ablüften und/oder Trocknen der Wasserbasislackschicht(en), ohne diese vollständig zu härten,
(IV) Applikation mindestens eines Klarlacks auf die Wasserbasislackschicht, wodurch mindestens eine Klarlackschicht resultiert, und
(V) gemeinsame Härtung der Wasserbasislackschicht(en) und der Klarlackschicht(en), wodurch eine farb- und/oder effektgebende Mehrschichtlackierung resultiert;
gefunden, bei dem man
(a) mindestens einen farb- und/oder effektgebenden, wäßrigen Unidecklack oder wäßrigen Wasserbasislack verwendet, der keine Metallplättchenpigmente enthält und der nach dem Aushärten eine farb- und/oder effektgebende Unidecklackierung oder Wasserbasislackierung liefert, die eine Wasserdampfpermeabilität δ_{60°C} >6,0 mg/h • m • bar oder p_{60°C} > 286,4 g • 100 µm/m² • d, worin d für die Zeiteinheit Tag steht, aufweist; oder
(b) mindestens einen effektgebenden oder farb- und effektgebenden, wäßrigen Unidecklack oder wäßrigen Wasserbasislack verwendet, der Metallplättchenpigmente enthält und der nach dem Aushärten eine farb- und/oder effektgebende. Unidecklackierung oder Wasserbasislackierung liefert, die eine Wasserdampfpermeabilität δ_{60°C} > 4,0 mg/h • m • bar oder δ_{60°C} > 190,92 g • 100 µm/m² • d aufweist, wobei man die Wasserdampfpermeabiltität der farb- und/oder effektgebenden Unidecklackierung oder Wasserbasislackierung durch Zugabe von
   (i) mindestens einem hochsiedenden ("langen") organischen Lösemittel, ausgewählt aus der Gruppe der Triorganophosphate, insbesondere Trialkyl- und/oder Tricycloalkylphosphate, wie Tripropyl-, Tributyl-, Triamyl-, Trihexyl- oder Tricyclohexyl phosphat, insbesondere Tributylphosphat,
   einstellt.

Im folgenden wird das neue Verfahren zur Herstellung einer farb- und/oder effektgebenden Lackierung auf einem grundierten oder ungrundierten Substrat als "erfindungsgemäßes Verfahren" bezeichnet.

Im Hinblick auf den Stand der Technik war es überraschend und für den Fachmann nicht vorhersehbar, daß die Aufgabe, die der vorliegenden Erfindung zugrundeliegt, mit Hilfe des erfindungsgemäßen Verfahrens gelöst werden konnte. Insbesondere überraschte, daß ausgerechnet die Wasserdampfpermeabilität, die in der Membrantechnik eine wesentliche Rolle spielt, ausschlaggebend für die Lösung des Problems der Kocherneigung sein würde. Dies war umso mehr überraschend, als die Membrantechnik von dem hier in Rede stehenden technischen Gebiet völlig verschieden ist.

Das erfindungsgemäße Verfahren dient der Herstellung farb- und/oder effektgebender Mehrschichtlackierungen auf grundierten oder ungrundierten Substraten.

Als Substrate kommen alle zu lackierenden Oberflächen, die durch eine Härtung der hierauf befindlichen Lackierungen unter Anwendung von Hitze und/oder aktinischer Strahlung nicht geschädigt werden, in Betracht.

Geeignete Substrate bestehen beispielsweise aus Metallen, Kunststoffen, Holz, Keramik, Stein, Textil, Faserverbunden, Leder, Glas, Glasfasern, Glas- und Steinwolle, mineral- und harzgebundene Baustoffen, wie Gips- und Zementplatten oder Dachziegel, sowie Verbunden dieser Materialien.

Demnach ist das erfindungsgemäße Verfahren für die Lackierung von Bauwerken im Innen- und Außenbereich, Möbeln, Türen und Fenstern, für die Automobilserien- und -reparaturlackierung und die industrielle Lackierung, inklusive Coil Coating, Container Coating und die Imprägnierung oder Beschichtung elektrotechnischer Bauteile, vorzüglich geeignet. Im Rahmen der industriellen Lackierungen eignet es sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen. Vor allem aber ist das erfindungsgemäße Verfahren für die Automobilserien- und -reparaturlackierung geeignet.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht. Im Falle von Metall kann das Substrat auch einer Oberflächenbehandlung, beispielsweise einer Galvanisierung oder einer Phosphatierung oder Eloxierung, unterzogen worden sein.

Insbesondere in der Automobilserienlackierung wird auf die vollständig ausgehärtete oder die lediglich getrocknete Elektrotauchlackierung (ETL) ein Füller oder eine Steinschlagschutzgrundierung appliziert. Diese Lackschicht wird entweder für sich alleine oder zusammen mit der darunter liegenden Elektrotauchlackschicht vollständig ausgehärtet. Die applizierte Füllerschicht kann auch lediglich getrocknet oder partiell ausgehärtet werden, wonach sie mit den darüber liegenden Lackschichten sowie gegebenenfalls mit der darunter liegenden Elektrotauchlackschicht vollständig ausgehärtet wird (erweiterte Naß-in-naß-Verfahren). Im Rahmen der vorliegenden Erfindung umfaßt der Begriff Grundierung auch die Kombination von Elektrotauchlackierung und Füllerlackierung oder Steinschlagschutzgrundierung.

Beispiele geeigneter Elektrotauchlacke sowie ggf. von Naß-in-naß-Verfahren werden in der japanischen Patentanmeldung 1975-142501 (japanische Offenlegungsschrift JP 52-065534 A 2, Chemical Abstracts Referat Nr. 87: 137427) oder den Patentschriften US 4,375,498 A 1, US 4,537,926 A 1, US 4, 761,212 A 1, EP 0 529 335 A 1, DE 41 25 459 A 1, EP 0 595 186 A 1, EP 0 074 634 A 1, EP 0 505 445 A 1, DE 42 35 778 A 1, EP 0 646 420 A 1, EP 063 966 0 A 1, EP 0 817 648 A1 ,DE 195 12 017 C1 ,EP 0 192 113 A 2, DE 41 26 476 A1 oder WO 98/07794 beschrieben. Üblicherweise sind die hieraus hergestellten Elektrotauchlackierungen 5 bis 70, vorzugsweise 7 bis 65, bevorzugt 9 bis 60, besonders bevorzugt 11 bis 55, ganz besonders bevorzugt 13 bis 50 und insbesondere 15 bis 45 µm dick.

Beispiele geeigneter Füllerlackierungen und Steinschlagschutzgrundierungen werden beispielsweise in den Patentanmeldungen und Patenten EP 0 427 028 A 1, DE 4142 816 A 1, DE 38 05 629 C 1, DE 31 08 861 C 2 oder DE 195 04 947 A1 beschrieben werden. Üblicherweise sind sie 10 bis 100, vorzugsweise 11 bis 95, bevorzugt 12 bis 90, besonders bevorzugt 13 bis 85, ganz besonders bevorzugt 14 bis 80 und insbesondere 15 bis 75 µm dick.

Weitere Beispiele gut geeigneter Substrate sind grundierte oder ungrundierte Kunststofformteile aus ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kwzbezeichnungen nach DIN 7728T1), Polymerblends dieser Kunststoffe, modifizierte Kunststoffe oder faserverstärkte Kunststoffe. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

In einer ersten Variante des erfindungsgemäßen Verfahrens wird im ersten Verfahrenschritt mindestens ein farb- und/oder effektgebender, wäßriger Unidecklack auf das Substrat appliziert, wodurch mindestens eine Unidecklackschicht resultiert.

In einer zweiten Variante des erfindungsgemäßen Verfahrens wird im ersten Verfahrenschritt mindestens ein farb- und/oder effektgebender Wasserbasislacke auf das Substrat appliziert, wodurch mindestens eine Wasserbasislackschicht resultiert.

Sowohl der wäßriger Unidecklack als auch der Wasserbasislack sind physikalisch, thermisch oder thermisch und mit aktinischer Strahlung härtbar.

Im Rahmen der vorliegenden Erfindung bedeutet der Begriff "physikalische Härtung" die Härtung einer Unidecklackschicht oder Wasserbasislackschicht durch Verfilmung, wobei die Verknüpfung innerhalb der Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Die thermisch härtbaren wäßrigen Unidecklacke oder Wasserbasislacke können selbstvernetzend oder fremdvernetzend sein.

Im Rahmen der vorliegenden Erfindung bezeichnet der Begriff "selbstvernetzend" die Eigenschaft eines Bindemittels, mit sich selbst Vernetzungsreaktionen einzugehen. Voraussetzung hierfür ist, daß in den Bindemitteln komplementäre reaktive funktionelle Gruppen enthalten sind, die miteinander reagieren und so zu einer Vernetzung führen. Oder aber die Bindemittel enthalten reaktive funktionelle Gruppe die "mit sich selbst" reagieren. Als fremdvernetzend werden dagegen solche wäßrigen Unidecklacke und Wasserbasislacke bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Die wäßrigen Unidecklacke und Wasserbasislacke können thermisch und mit aktinischer Strahlung härtbar sein.

Die Härtung mit aktinischer Strahlung erfolgt über Gruppen die Bindungen enthalten, die mit aktinischer Strahlung aktivierbar sind. Im Rahmen der vorliegenden Erfindung ist unter aktinischer Strahlung elektromagnetische Strahlung, wie sichtbares Licht, UV-Strahlung oder Röntgenstrahlung, insbesondere UV-Strahlung, und Korpuskularstrahlung wie Elektronenstrahlung zu verstehen.

Werden die thermische und die Härtung mit aktinischer Strahlung bei einem Unidecklack oder Wasserbasislack gemeinsam angewandt, spricht man auch von "Dual Cure" und "Dual-Cure-Unidecklack oder -Wasserbasislack ".

Die thermisch oder thermisch und mit aktinischer Strahlung härtbaren, wäßrigen Unidecklacke und die Wasserbasislacke können Einkomponenten- oder Zwei- oder Mehrkomponentensysteme sein.

Im Rahmen der vorliegenden Erfindung ist unter einem Einkomponentensystem ein Unidecklack oder Wasserbasislack zu verstehen, bei dem das Bindemittel und das Vernetzungsmittel nebeneinander in dem Beschichtungsstoff vorliegen. Voraussetzung hierfür ist, daß die beiden Bestandteile erst bei höheren Temperaturen und/oder bei Bestrahlen mit aktinischer Strahlung miteinander vernetzen. Einkomponentensysteme werden vor allem in der Automobilserienlackierung verwendet.

Demgegenüber ist unter einem Zwei- oder Mehrkomponentensystem ein Unidecklack oder Wasserbasislack zu verstehen, bei dem das Vernetzungsmittel wegen seiner hohen Reaktivität getrennt von den übrigen Bestandteilen des Beschichtungsstoffs gelagert wird und erst kurz vor dessen Anwendung zu den übrigen Bestandteilen hinzugegeben wird. Zwei- oder Mehrkomponentensysteme werden vor allem in der Automobilreparaturlackierung verwendet.

Farb- und/oder effektgebende, wäßrige Unidecklacke oder Wasserbasislacke, die für das erfindungsgemäße Verfahren besonders gut geeignet sind, sind wäßrige Beschichtungsstoffe auf der Basis gesättigter, ungesättigter und/oder mit olefinisch ungesättigten Verbindungen gepfropfter, ionisch und/oder nichtionisch stabilisierter Polyurethane, wie sie in den Patentanmeldungen EP 0 089 497 A 1, EP 0 256 540 A1, EP 0 260 447 A1, EP 0 297 576 A1, WO 96/12747, EP 0 523 610 A 1, EP 0 228 003 A 1, EP 0 397 806 A1, EP 0 574 417 B 1, WO 92/15405, EP 0 531 510 A1, EP 0 581 211 A 1, EP 0 708 788 A 1, EP 0 593 454 A 1, DE-A-43 28 092 A 1, EP 0 299 148 A 1, EP 0 394 737 A 1, EP 0 590 484 A 1, EP 0 234 362 A 1, EP 0 234 361 A 1, EP 0 543 817 A 1, WO 95/14721, EP 0 521 928 A 1, EP 0 522 420 A 1, EP 0 522 419 A 1, EP 0 649 865 A1, EP 0 536 712 A 1, EP 0 596 460 A 1, EP 0 596 461 A 1, EP 0 584 818 A 1, EP 0 669 356 A 1, EP 0 634 431 A 1, EP 0 678 536 A 1, EP 0 354 261 A 1, EP 0 424 705 A 1, WO 97/49745, WO 97/49747, EP 0 401 565 A 1, EP 0 496 205 A 1, EP 0 358 979 A 1, EP 469 389 A 1, DE 24 46 442 A 1, DE 34 09 080 A 1, DE 195 47 944 A 1, DE 197 41 554 A 1 oder EP 0 817 684, Spalte 5, Zeilen 31 bis 45, im Detail beschrieben werden.

Bei den hierin enthaltenen farbgebenden Pigmenten kann es sich um organische oder um anorganische Pigmente handeln. Beispiele geeigneter Pigmente sind natürlich vorkommende Pigmente (vgl. Römpp Lexikon Lacke und Druckfarben, Georg Thieme Verlag, Stuttgart, New York, Seiten 400 und 467, »Natürlich vorkommende Pigmente«), synthetische Eisenoxid-Pigmente, polycyclische Pigmente (vgl. Römpp Lexikon Lacke und Druckfarben, Seite 459 »Polycyclische Pigmente«), Azomethin-Pigmente, Azopigmente (vgl. Römpp Lexikon Lacke und Druckfarben, Seite 52, »Azomethin-Pigmente«, »Azopigmente«) oder Metallkomplex-Pigmente (vgl. Römpp Lexikon Lacke und Druckfarben, Seite 379, »Metallkomplex-Pigmente«).

Als Effektpigmente können Metallplättchenpigmente wie handelsübliche Aluminiumbronzen, gemäß DE-A-36 36 183 chromatierte Aluminiumbronzen, handelsübliche Edelstahlbronzen und nichtmetallische Effektpigmente, wie zum Beispiel Perlglanz- oder Interferenzpigmente, eingesetzt werden. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, oder die Patentschriften und Patentanmeldungen DE 36 36 156 A 1, DE 37 18 446 A 1, DE 37 19 804 A 1, DE 39 30 601 A 1, EP 0 068 311 A 1, EP 0 264 843 A 1, EP 0 265 820 A 1, EP 0 283 852 A 1, EP 0 293 746 A 1, EP 0 417 567 A 1, US 4,828,826 A oder US 5,244,649 A verwiesen.

Werden Metallplättchenpigmente als effektgebende Pigmente verwendet, wird die Wasserdampfpermeabilität signifikant erniedrigt, sodaß erfindungsgemäß ein niedrigerer Schwellenwert agesetzt werden muß.

Die Applikation des Unidecklacks oder des Wasserbasislacks kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen. Die Applikation kann bei Temperaturen von max. 70 bis 80 °C durchgeführt werden, so daß geeignete Applikationsviskositäten erreicht werden, ohne daß bei der kurzzeitig einwirkenden thermischen Belastung eine Veränderung oder Schädigungen des Unidecklacks oder des Wasserbasislacks und seines gegebenenfalls wiederaufzubereitenden Overspray eintreten. So kann das Heißspritzen so ausgestaltet sein, daß der Unidecklacke oder der Wasserbasislack nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absoiptionsmedium für den Overspray, z. B. dem Unidecklack oder dem Wasserbasislack selbst, betrieben wird.

Bevorzugt wird die Applikation bei Beleuchtung mit sichtbarem Licht einer Wellenlänge von über 550 µm oder unter Lichtausschluß durchgeführt, wenn der Unidecklack oder der Wasserbasislack thermisch und mit aktinischer Strahlung härtbar ist. Hierdurch werden eine stoffliche Änderung oder Schädigung des Unidecklacks oder des Wasserbasislacks und des Overspray vermieden.

Selbstverständlich können die vorstehend beschriebenen Applikationsmethoden auch bei der Herstellung der übrigen Lackschichten im Rahmen des erfindungsgemäßen Verfahrens angewandt werden.

Im Rahmen des eifIndungsgelnäßen Verfahrens wird die Unidecklackschicht nach ihrer Applikation physikalisch, thermisch oder thermisch und mit aktinischer Strahlung ausgehärtet. Wegen ihres hohen Gehalts an Pigmenten, die die aktinische Strahlung stark absorbieren und/oder streuen, wird die Unidecklackschicht vorzugsweise thermisch gehärtet. Hierbei werden bevorzugt die nachfolgend beschriebenen Methoden der thermischen Härtung sowie gegebenenfalls die nachfolgend beschriebenen Methoden der Härtung mit aktinischer Strahlung angewandt (Dual Cure).

Für die physikalische Härtung der Unidecklackschicht müssen keine besonderen Maßnahmen ergriffen werden.

Bei der thermischen Härtung oder bei Dual Cure der Unidecklackschicht können die hierunter befindlichen Lackschichten der Grundierung mit ausgehärtet werden, sofern sie noch nicht oder nur partiell gehärtet sind (Naß-in-naß-Verfahren).

Die Aushärtung kann nach einer gewissen Ruhezeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Unidecklackschicht und zum Verdunsten von flüchtigen Bestandteilen wie Wasser sowie gegebenenfalls noch vorhandene Lösemittel (Ablüften). Die Ruhezeit oder das Ablüften kann durch die Anwendung erhöhter Temperaturen bis 90 °C und/oder durch eine reduzierte Luftfeuchte < 10g Wasser/kg Luft, insbesondere < 5g/kg Luft, unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Wie bei der nachstehend beschriebenen Härtung mit aktinischer Strahlung kann auch die thermische Härtung stufenweise erfolgen.

Bei Einkomponentensystemen erfolgt die thermische Härtung vorzugsweise bei Temperaturen oberhalb 100°C. Im allgemeinen empfiehlt es sich, hierbei Temperaturen von 180°C, vorzugsweise 170°C und insbesondere 150°C nicht zu überschreiten. Bei Zwei- oder Mehrkomponentensystemen erfolgt die thermische Härtung vorzugsweise bei Temperaturen unter 100°C, bevorzugt unter 60°C.

Vorzugsweise wird die Härtung mit aktinischer Strahlung mit UV-Strahlung und/oder Elektronenstrahlen durchgeführt. Vorzugsweise wird hierbei eine Dosis von 1.000 bis 3.000, bevorzugt 1.100 bis 2.900, besonders bevorzugt 1.200 bis 2.800, ganz besonders bevorzugt 1.300 bis 2.700 und insbesondere 1.400 bis 2.600 mJ/cm² angewandt. Gegebenenfalls kann diese Härtung mit aktinischer Strahlung von anderen Strahlenquellen ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Unidecklackschicht gewährleistet werden. Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder - niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken, wie sie für Automobilkarosserien vorgesehen sind, können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern verbunden mit einer automatischen Bewegungseinrichtung für das Bestrahlen von Hohlräumen oder Kanten (partiell) ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Werden die thermische Härtung und Härtung mit aktinischer Strahlung zusammen angewandt, können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Besondere Vorteile resultieren, wenn die Unidecklackschicht in zwei getrennten Verfahrensschritten zuerst mit aktinischer Strahlung und anschließend thermisch gehärtet wird.

Selbstverständlich können die vorstehend beschriebenen Härtungsmethoden im Rahmen des erfindungsgemäßen Verfahrens auch zur Härtung der übrigen Lackschichten, insbesondere der Wasserbasislackschichten, angewandt werden.

Durch die Härtung resultiert die ein- oder mehrschichtige Unidecklackierung, wonach die erste Variante des erfindungsgemäßen Verfahrens abgeschlossen ist. Vorzugsweise ist die Unidecklackierung 10 bis 100, bevorzugt 11 bis 90, besonders bevorzugt 12 bis 80, ganz besonders bevorzugt 13 bis 70 und insbesondere 14 bis 60 µm dick.

Bei der zweite Variante des erfindungsgemäßen Verfahrens wird oder werden die Wasserbasislackschicht(en) nicht ausgehärtet, sondern nur abgelüftet, getrocknet oder partiell ausgehärtet. D. h., daß keine der vorhandenen zur thermischen Vernetzung befähigten reaktiven funktionellen Gruppen umgesetzt werden oder nur ein Teil hiervon, etwa bis zu 90, vorzugsweise bis zu 80 und insbesondere bis zu 70 Mol-%, umgesetzt wird. Bei der Ablüftung oder der Ruhezeit werden die vorstehend beschriebenen Bedingungen angewandt.

Bei dem erfindungsgemäßen Verfahren wird die Wasserbasislackschicht mit mindestens einem Klarlack überschichtet (Naß-in-naß-Verfahren), wobei die vorstehend beschriebenen Applikationsmethoden angewandt werden.

Beispiele geeigneter Klarlacke sind Ein- oder Mehrkomponentenklarlacke, Pulverklarlacke, Pulverslurryklarlacke, UV-härtbare Klarlacke oder Sealer, wie sie aus den Patentanmeldungen, Patentschriften und Veröffentlichungen DE 42 04 518 A 1, EP 0 594 068 A 1, EP 0 594 071 A 1, EP 0 594 142 A 1, EP 0 604 992 A 1, EP 0 596 460 A 1, WO 94/10211, WO 94/10212, WO 94/10213, WO 94/22969 oder WO 92/22615, US 5,474,811 A 1, US 5,356,669 A 1 oder US 5,605,965 A 1, DE 42 22 194 A 1, BASF Lacke + Farben AG, "Pulverlacke", 1990, BASF Coatings AG "Pulverlacke, Pulverlacke für industrielle Anwendungen", Januar 2000, US 4,268,542 A 1, DE 195 40 977 A 1, DE 195 18 392 A 1, DE 196 17 086 A 1, DE-A-196 13 547, DE 196 52 813 A 1, DE-A-198 14 471 A 1, EP 0 928 800 A 1, EP 0 636 669 A 1, EP 0 410 242 A 1, EP 0 783 534 A 1, EP 0 650 978 A 1, EP 0 650 979 A 1, EP 0 650 985 A 1, EP 0 540 884 A 1, EP 0 568 967 A 1, EP 0 054 505 A 1, EP 0 002 866 A 1, DE 197 09 467 A 1, DE 42 03 278 A 1, DE 33 16 593 A 1, DE 38 36 370 A 1, DE 24 36 186 A 1, DE 20 03 579 B 1, WO 97/46549, WO 99/14254, US 5,824,373 A, US 4,675,234 A, US 4,634,602 A, US 4,424,252 A, US 4,208,313 A, US 4,163,810 A, US 4,129,488 A, US 4,064,161 A, US 3,974,303 A, EP 0 844 286 A 1, DE 43 03 570 A 1, DE 34 07 087 A 1, DE 40 11 045 A 1, DE 40 25 215 A 1, DE 38 28 098 A 1, DE 40 20 316 A 1 oder DE 41 22 743 A 1 bekannt sind.

Im allgmeinen werden die Wasserbasislackschicht(en) und Klarlackschicht(en) in einer Naßschichtdicke appliziert, daß nach ihrer gemeinsamen Aushärtung Schichten mit der für ihre Funktionen notwendigen und vorteilhaften Schichtdicken resultieren. Im Falle der Wasserbasislackierung liegt sie bei 5 bis 70, vorzugsweise 6 bis 65, besonders bevorzugt 7 bis 60 und insbesondere 8 bis 55 µm, und im Falle der Klarlackierungen liegt sie bei 10 bis 100, vorzugsweise 15 bis 80, besonders bevorzugt 20 bis 75 und insbesondere 25 bis 70 µm.

Bei der gemeinsamen Härtung der Wasserbasislackschicht(en) und Klarlackschicht(en), insbesondere der Wasserbasislackschicht und der Klarlackschicht, werden die vorstehend beschriebenen Methoden angewandt. Gegebenenfalls können hierbei die darunter liegenden, noch nicht vollständig ausgehärteten Lackschichten der Grundierung mit ausgehärtet werden (erweitertes Naß-in-naß-Verfahren).

Hierbei erweist es sich als ein besonderer Vorteil des erfindungsgemäße Verfahrens, daß hiermit von Oberflächenstörungen, insbesondere von Kochern, freie Wasserbasislackierungen besonders hoher Schichtdicke hergestellt werden können. Dieser besondere Vorteile bleibt erhalten, wenn die Wasserbasislackierungen in Schichtdicken > 20, vorzugsweise > 25 und insbesondere > 30 µm hergestellt werden. Dieser besondere Vorteil strahlt auch auf die farb- und/oder effektgebenden Mehrschichtlackierungen aus, die diese Wasserbasislackierungen enthalten; auch sie sind frei von Kochern.

Erfindungsgemäß wird dieser besondere Vorteil dadurch erzielt, daß die erfindungsgemäß zu verwendenden wäßrigen Unidecklacke oder Wasserbasislacke, die keine Metallplättchenpigmente enthalten, in ihrer stofflichen Zusammensetzung so eingestellt werden, daß die hieraus hergestellten Unidecklackierungen oder Wasserbasislackierungen nach ihrer Aushärtung eine Wasserdampfpermeabilität δ_{60°C} > 6, vorzugsweise > 7, bevorzugt > 8 und insbesondere > 9 mg/h • m • bar oder p_{60°C} > 286,4, vorzugsweise > 334,11 bevorzugt > 381,84 und insbesondere > 429,57 g • 100 µm/m² • d aufweisen.

Des weiteren wird dieser besondere Vorteile erfindungsgemäß dadurch erzielt, daß die erfindungsgemäß zu verwendenden wäßrigen Unidecklacke oder Wasserbasislacke, die Metallplättchenpigmente enthalten, in ihrer stofflichen Zusammensetzung so eingestellt werden, daß die hieraus hergestellten Unidecklackierungen oder Wasserbasislackierungen nach ihrer Aushärtung eine Wasserdampfpermeabilität δ_{60°C} > 4, vorzugsweise > 5, bevorzugt > 6 und insbesondere > 7 mg/h • m • bar oder p_{60°C} > 190,92, vorzugsweise > 238,65 bevorzugt > 286,4 und insbesondere > 334,11 g • 100 µm/m² • d aufweisen

Die Wasserdampfpermeabilität kann nach den unterschiedlichsten, von der Membrantechnik her bekannten Methoden ermittelt werden. Erfindungsgemäß ist es von Vorteil, wenn die Wasserdampfpermeabilität nach ASTM F - 1249 bestimmt wird oder bestimmt wird, indem man in einen Glastiegel einer definierten Öffnung eine bestimmte Menge Wasser einfüllt, die definierte Öffnung des Glastiegels mit der Unidecklackierung oder Wasserbasislackierung in der Form einer freien Membran einer definierten Dicke haftfest verschließt, überstehende Teile der Membran bündig zum Tiegelrand entfernt, den Glastiegel mit Wasser und Membran auswiegt, bei einer konstanten Temperatur oberhalb der Zimmertemperatur während eines definierten Zeitraums lagert und hiernach den Gewichtsverlust bestimmt.

Die Einstellung der stofflichen Zusammensetzung der wäßrigen Unidecklacke oder Wasserbasislacke kann in der unterschiedlichsten Art und Weise erfolgen. Beispielsweise können die eingesetzten Polyurethane, Vernetzungsmittel und/oder Pigmente so variiert werden, daß sich die erfindungswesentliche Wasserdampfpermeabilität ergibt.

Erfindungsgemäß ist es von Vorteil, die Wasserdampfpermeabilität durch die Zugabe von
(i) hochsiedenden ("langen") organischen Lösemitteln,
(ii) Polyetherpolyolen,
(iii) wäßrigen Dispersionen mindestens eines Copolymerisats, herstellbar, indem in einer wäßrigen Dispersion mindestens eines Polyurethanharzes, das ein zahlenmittleres Molekulargewicht Mn von 1000 bis 30.000 Dalton aufweist und im statistischen Mittel pro Molekül 0,05 bis 1,1 polymerisierbare Doppelbindungen enthält, mindestens ein olefinisch ungesättigtes Monomer in Gegenwart mindestens eines wasserunlöslichen Initiators radikalisch polymerisiert wird, wobei das Gewichtsverhältnis zwischen dem Polyurethanharz oder dem Gemisch von Poylurethanharzen und dem olefinisch ungesättigten Monomeren oder dem Gemisch aus olefinisch ungesättigten Monomeren zwischen 1:10 und 10:1 1 liegt;
   und/oder von
(iv) wäßrigen Dispersionen, herstellbar, indem man eine Mischung aus mindestens einem hydrophoben Poylurethanharz, mindestens einem olefinisch ungesättigten Monomeren, mindestens einer oberflächenaktiven Substanz und Wasser in einem sehr hohen Scherfeld dispergiert und homogenisiert, wodurch stabilisierte Teilchen der genannten Ausgangsverbindungen in der wäßrigen Phase resultieren, die olefinisch ungesättigten Monomere innerhalb der Teilchen (co)polymerisiert, wodurch eine Dispersion eines hydrophob modifizierten Kernpolymers resultiert, eine Mischung aus olefinisch ungesättigten Monomeren, enthaltend mindestens ein hydrophiles olefinisch ungesättigtes Monomer, zu der Dispersion des hydrophob modifizierten Kernpolymers hinzugibt und die Monomeren in der Gegenwart des Kernpolymers copolymerisiert, wodurch ein hydrophiles Schalenpolymer resultiert;
einzustellen.

Im Rahmen der vorliegenden Erfindung ist unter der Eigenschaft hydrophil die konstitutionelle Eigenschaft eines Moleküls oder einer funktionellen Gruppe zu verstehen, in die wäßrige Phase einzudringen oder darin zu verbleiben. Demgemäß ist im Rahmen der vorliegenden Erfindung unter der Eigenschaft hydrophob die konstitutionelle Eigenschaft eines Moleküls oder einer funktionellen Gruppe zu verstehen, sich gegenüber Wasser exophil zu verhalten, d. h., sie zeigen die Tendenz, in Wasser nicht einzudringen oder die wäßrige Phase zu verlassen. Ergänzend wird auf Römpp Lexikon Lacke und Druckfarben, Georg Thieme Verlag, Stuttgart, New York, 1998, »Hydrophilie«, »Hydrophobie«, Seiten 294 und 295, verwiesen.

Beispiele geeigneter langer Lösemittel (i) sind Triorganophosphate, insbesondere Trialkyl-und/oder Tricycloalkylphosphate wie Tripropyl-, Tributyl-, Triamyl-, Trihexyl- oder Tricyclohexylphosphat, insbesondere Tributylphosphat.

Der Gehalt der wäßrigen Unidecklacke oder Wasserbasislacke an langen Lösemitteln (i) kann breit variieren. Vorzugsweise liegt er bei 0,1 bis 10, bevorzugt 0,2 bis 8, besonders bevorzugt 0,3 bis 6, ganz besonders bevorzugt 0,4 bis 4 und insbesondere 0,5 bis 3 Gew.-%, jeweils bezogen auf den Unidecklack oder Wasserbasislack.

Geeignete Polyetherpolyole (ii) weisen Hydroxylzahlen von 35 bis 1000 mg KOH/g und zahlenmittlere Molekulargewicht von 180 bis 5000 Dalton auf. Polyetherpolyole (ii) sind übliche und bekannte Produkte und werden beispielsweise unter der Marke Lupranol® von der Firma BASF Aktiengesellschaft vertrieben.

Der Gehalt der wäßrigen Unidecklacke oder Wasserbasislacke an Polyetherpolyolen (ii) kann ebenfalls breit variieren. Vorzugsweise liegt er bei 0,5 bis 20, bevorzugt 0,6 bis 18, besonders bevorzugt 0,7 bis 16, ganz besonders bevorzugt 0,8 bis 14 insbesondere 0,9 bis 12 Gew.-%, jeweils bezogen auf den Unidecklack oder Wasserbasislack.

Geeignete wäßrige Dispersionen (iii) werden im Detail in dem deutschen Patent DE 197 36 535 C 1 beschrieben.

Geeignete wäßrige Dispersionen (iv) werden im Detail in der europäischen Patentanmeldung EP 0 755 946 A 2 beschrieben.

Der Gehalt der wäßrigen Unidecklacke oder Wasserbasislacke an den wäßrigen Dispersionen (iii) und/oder (iv) kann ebenfalls breit variieren. Vorzugsweise liegt er bei 2 bis 40, bevorzugt 3 bis 35, besonders bevorzugt 4 bis 30, ganz besonders bevorzugt 5 bis 25 und insbesondere 6 bis 20 Gew.-%, jeweils bezogen auf den Unidecklack oder Wasserbasislack.

Die in erfindungsgemäßer Verfahrensweise hergestellten farb- und/oder effektgebenden Unidecklackierungen oder farb- und/oder effektgebenden Mehrschichtlackierungen weisen hervorragende optischen Eigenschaften auf. Aufgrund ihrer von Kochern und sonstigen Oberflächenstörungen freien Oberflächen kommen die Farben, Metallic-Effekte und/oder dichroitischen Effekte besonders intensiv zur Wirkung. Darüber hinausweist die Mehrschichtlackierung auch eine hervorragende Zwischenschichthaftung auf, die auch nicht durch die Belastung im Schwitzwasserkonstantklima vermindert wird.

### Beispiele und Vergleichsversuch

### Vergleichsversuch V 1

### Die Herstellung eines Wasserbasislacks und einer Vfasserbasislackierung in nicht erfindungsgemäßer Verfahrensweise

In einem Dissolver wurden 31 Gewichtsteile eines anorganischen Verdickungsmittels (Natrium-Magnesium-Schichtsilikat, 3%ig in Wasser) vorgelegt. Hierzu wurden 16 Gewichtsteile einer gemäß Beispiel 1, »Herstellung von Polyurethanharzdispersionen«, Seite 14, Zeile 13, bis Seite 15, Zeile 27, insbesondere Ziff. 1.3., Seite 15, Zeilen 23 bis 27, der internationalen Patentanmeldung WO 92/15405 hergestellten wäßrigen Polyurethandispersion gegeben und unter starkem Rühren mit dem Verdickungsmittel vermischt.

Getrennt hiervon wurden 3,5 Gewichtsteile einer gemäß Beispiel zwei, Seite 15, Zeile 31, bis Seite 16, Zeile 22, der internationalen Patentanmeldung WO 92/15405 hergestellten Polyesterdispersion in einem Rührgefäß vorgelegt und mit 5,5 Gewichtsteilen eines handelsüblichen, wasserverdünnbaren Melaminformaldehydharzes in Isobutanol (Luwipal® LR 8968 der Firma BASF Aktiengesellschaft) und 6 Gewichtsteilen der vorstehend beschriebenen Polyurethandispersion vermischt. Die resultierende Mischung wurde mit der vorstehend beschriebenen vermischt.

Zu dem resultierenden Gemisch wurden nacheinander 2 Gewichtsteile Ethylhexanol und 2,5 Gewichtsteile einer Tensidlösung aus 50 Gew.-% Surfynol® 100 (Firma Air Products) und 50 Gew.-% Butylglykol eingerührt.

Getrennt hiervon wurden 3,4 Gewichtsteile einer Rußpaste und 14,3 Gewichtsteile einer Grünpigmentpaste unter Rühren vermischt und ebenfalls in die obige Mischung eingerührt. Die Rußpaste bestand aus, bezogen auf ihre Gesamtmenge, 68,7 Gew.-% der vorstehend beschriebenen Polyurethandispersion, 5 Gew.-% der vorstehend beschriebenen Polyesterdispersion, 8,6 Gew.-% Butyldiglykol, 7,6 Gew.-% deionisiertem Wasser und 10,1 Gew.-% Ruß. Die Grünpigmentpaste bestand aus 76,5 Gew.-% der vorstehend beschriebenen Poylurethandispersion und 23,5 Gew.-% Heliogen Grün L 9361.

Getrennt hiervon wurden 3,5 Gewichtsteile eines Mischlacks, bestehend aus, bezogen auf den Mischlack, 38,4 Gew.-% des vorstehend beschriebenen Verdickungsmittels, 6,8 Gew.-% der vorstehend beschriebenen Melanünformaldehydharzlösung, 38,4 Gew.-% der vorstehend beschriebenen Poylurethandispersion, 7,6 Gew.-% der vorstehend beschriebenen Polyesterdispersion und 8,8 Gew.-% 2-Butoxyethanol, und 1,2 Gewichtsteile des Perlglanzpigments Merlin Super-grün 839 Z angeteigt und homogenisiert. Die resultierende Pigmentpaste wurde zu der vorstehend beschriebenen Mischung gegeben.

Die hiernach resultierende Mischung wurde noch mit 12 Gewichtsteilen deionisiertem Wasser versetzt, und es wurde mit Dimethylethanolamin (15prozentig in Wasser) ein pH-Wert von 7,6 bis 8,2 eingestellt.

Die Kochergrenze des resultierenden Wasserbasislacks wurde wie folgt bestimmt.

Ein mit einer Füllerlackierung beschichtetes Blech der Abmessungen 30 mal 50 cm wurde mit einem Klebstreifen versehen, um nach der Lackierung die Schichtdickendifferenzen zu ermitteln. Der Wasserbasislack wurde elektrostatisch keilförmig appliziert. Die resultierende Wasserbasislackschicht wurde während einer Minute bei Raumtemperatur abgelüftet und anschließend während 10 Minuten in Umluftofen bei 70°C getrocknet.

Auf die getrocknete Wasserbasislackschicht wurde ein üblicher und bekannter Zweikomponentenklarlack appliziert. Die resultierende Klarlackschicht wurde während 20 Minuten bei Raumtemperatur abgelüftet. Anschließend wurden die Wasserbasislackschicht und die Klarlackschicht in einem Umluftofen während 20 Minuten bei 140°C gehärtet.

Nach der visuellen Auswertung der Kocher wird die Schichtdicke der Kochergrenze bestimmt. Im vorliegenden Fall lag sie bei 23 µm.

Zur Bestimmung der Wasserdampfpermeabilität wurde der Wasserbasislack in gleichmäßiger Schichtdicke auf eine Stabylantafel der Abmessungen 12 mal 12 cm appliziert und ausgehärtet. Hiernach wurde die Wasserbasislackierung in der Form eines Films von der Stabylantafel abgenommen, und es wurde die Schichtdicke des Lackfilms bestimmt. Sie lag bei 20 µm. An einer defektfreien Stelle des Lackfilms wurde mit einem Locheisen (Durchmesser: 40 mm) ein Stück ausgestanzt. Ein Glastiegel (Höhe: 2 cm; offene Oberfläche: 4,9 cm²) wurde mit deionisiertem Wasser teilweise gefüllt. Der überstehende Rand des Glastiegels wurde mit einem Zweikomponentenkleber (UHU-Plus Schnellfest) versehen, und die Öffnung des Glastiegels wurde mit dem ausgestanzten Stück verschlossen. Nach der Trocknung des Klebers (zwei Stunden) wurde der aufgeklebte Lackfilm mit einem Klingenmesser bündig zum Tiegelrand abgeschnitten. Der Prüfling wurde anschließend auf einer Analysenwaage gewogen und während 24 Stunden bei 60°C in einem Umluftofen gelagert. Hiernach wurde der Gewichtsverlust (620 mg) bestimmt.

Aus der aktiven Oberfläche, der Filmdicke, dem Wasserdampfdruck bei 60°C (0,199 bar), der Prüftzeit (24 Stunden) und der Temperatur errechnete sich die Wasserdampfpermeabilität zu δ_{60°C} = 5,3 mg/h • m • bar oder p_{60°C} = 252,97 g • 100 µm/m² • d.

### Beispiel 1

### Die Herstellung eines Wasserbasislacks und einer Wasserbasislackierung nach dem erfindungsgemäßen Verfahren

Der Vergleichsversuch V 1 wurde wiederholt, nur daß anstelle von 2-Ethylhexanol Tributylphosphat (i) verwendet wurde.

Die resultierende Wasserbasislackierung wies eine Wasserdampfpermeabilität von δ_{60°C} = 6,4 mg/h • m • bar oder p_{60°C} = 305,47 g • 100 µm/m² • d auf. Die Kochergrenze lag bei 27 bis 28 µm.

### Beispiel 2

### Die Herstellung eines Wasserbasislacks und einer Wasserbasislackierung nach dem erfindungsgemäßen Verfahren

Der Vergleichsversuch V 1 wurde wiederholt, nur daß anstelle der 16 Gewichtsteile der wäßrigen Polyurethandispersion gemäß Beispiel 1, »Herstellung von Polyurethanharzdispersionen«, Seite 14, Zeile 13, bis Seite 15, Zeile 27, insbesondere Ziff. 1.3., Seite 15, Zeilen 23 bis 27, der internationalen Patentanmeldung WO 92/15405
- 12,3 Gewichtsteile einer gemäß Seite 3, Zeile 56, bis Seite 6, Zeile 48, i. V. m. Seite 8, Zeilen 49 und 50, des deutschen Patents DE 197 36 535 C 1 hergestellten Dispersion (iii)
verwendet wurden.

Die resultierende Wasserbasislackierung wies eine Wasserdampfpermeabilität von δ_{60°C} = 7,7 mg/h • m • bar oder p_{60°C} = 367,52g • 100 µm/m² • d auf. Die Kochergrenze lag bei 28 bis 29 µm.

### Beispiel 3

### Die Herstellung eines Wasserbasislacks und einer Wasserbasislackierung nach dem erfindungsgemäßen Verfahren

Der Vergleichsversuch V 1 wurde wiederholt, nur daß anstelle der 16 Gewichtsteile der wäßrigen Polyurethandispersion gemäß Beispiel 1, »Herstellung von Polyurethanharzdispersionen«, Seite 14, Zeile 13, bis Seite 15, Zeile 27, insbesondere Ziff. 1.3., Seite 15, Zeilen 23 bis 27, der internationalen Patentanmeldung WO 92/15405
- 9,8 Gewichtsteile einer gemäß Example 1, Example 2 und Example 3 i. V. m. Example 4, Sample 1, Seite 8, Zeile 1, bis Seite 10, Zeile 50, insbesondere Seite 10, Table 1, Spalte 2, der europäischen Patentanmeldung EP 0 755 946 A 2 hergestellten Dispersion (iv)
verwendet wurden.

Die resultierende Wasserbasislackierung wies eine Wasserdampfpermeabilität von δ_{60°C} = 11,0 8 mg/h • m • bar oder p_{60°C} = 525,03g • 100 µm/m² • d auf. Die Kochergrenze lag bei über 34 µm.

### Beispiel 4

### Die Herstellung eines Wasserbasislacks und einer Wasserbasislackierung nach dem erfindungsgemäßen Verfahren

Der Vergleichsversuch V 1 wurde wiederholt, nur daß zusätzlich zu 2-Ethylhexanol 2 Gewichtsteile des Polyetherpolyols Lupranol® 3900 der Firma BASF Aktiengesellschaft (zahlenmittleres Molekulargewicht 180 Dalton; Hydroxylzahl 925 mg KOH/g) verwendet wurden.

Die resultierende Wasserbasislackierung wies eine Wasserdampfpermeabilität von δ_{60°C} = 6,5 mg/h • m • bar oder p_{60°C} = 310,25 g • 100 µm/m² • d auf. Die Kochergrenze lag bei 26 µm.

## Patentansprüche

1. Verfahren zur Herstellung einer farb- und/oder effektgebenden Lackierung auf einem grundierten oder ungrundierten Substrat durch
(I) Applikation mindestens eines farb- und/oder effektgebenden, wässrigen Unidecklacks auf das Substrat, wodurch mindestens eine Unidecklackierung resultiert, und
(II) Härtung der wässrigen Unidecklackschicht(en), wodurch eine farb- und/oder effektgebende Unidecklackierung resultiert;
oder alternativ durch
(I) Applikation mindestens eines farb- und/oder effektgebenden Wasserbasislacks auf das Substrat, wodurch mindestens eine wässrige Wasserbasislackschicht resultiert,
(II) Ablüften und/oder Trocknen der Wasserbasislackschicht(en), ohne diese vollständig zu härten,
(IV) Applikation mindestens eines Klarlacks auf die Wasserbasislackschicht, wodurch mindestens eine Klarlackschicht resultiert, und
(V) gemeinsame Härtung der Wasserbasislackschicht(en) und der Klarlackschicht(en), wodurch eine farb- und/oder effektgebende Mehrschichtlackierung resultiert,
**dadurch gekennzeichnet, dass** man hierbei
(a) mindestens einen farb- und/oder effektgebenden, wässrigen Unidecklack oder wässrigen Wasserbasislack verwendet, der keine Metallplättchienpigmente enthält und der nach dem Aushärten eine farb- und/oder effektgebende Unidecklackierung oder Wasserbasislackierung liefert, die eine Wasserdampfpermeabilität δ_{60°C} > 6,0 mg/h · m · bar oder δ_{60°C} > 286,4 g · µm/m² · d, worin d für die Zeiteinheit Tag steht, aufweist; oder
(b) mindestens einen effektgebenden oder farb- und effektgebenden, wässrigen Unidecklack oder wässrigen Wasserbasislack verwendet, der Metallplättchenpigmente enthält und der nach dem Aushärten eine farb- und/oder effektgebende Unidecklackierung oder Wasserbasislackierung, liefert, die eine Wasserdampfpermeabiltät δ_{60°C} > 4,0 mg/h · m · bar oder δ_{60°C} > 190,92 g · 100 µm/m² · d aufweist, wobei man die Wasserdampfpermeabiltität der farb- und/oder effektgebenden Unidecklackierung oder Wasserbasislackierung durch Zugabe von
(i) mindestens einem hochsiedenden ("langen") organischen Lösemittel, ausgewählt aus der Gruppe der Triorganophosphate, inbesondere Trialkyl- und/oder Tricycloalkylphosphate wie Tripropyl-, Tributyl-, Triamyl-, Trihexyl- oder Tricyclohexylphosphat, insbesondere Tributylphosphat,
einstellt.

2. Verfahren nach Anspruch 1, **dadurch gekennzeichnet, dass** die farb- und/oder effektgebenden, wässrigen Wasserbasislacke und Unidecklacke als Bindemittel mindestens ein gesättigtes, ungesättigtes und/oder mit olefinisch ungesättigten Verbindungen gepfropftes, ionisch und/oder nichtionisch stabilisiertes Polyurethan als Bindemittel enthalten.

3. Verfahren nach Anspruch 1 oder 2, **dadurch gekennzeichnet, dass** die farb- und/oder effektgebenden, wässrigen Wasserbasislacke und Unidecklacke physikalisch härtend, thermisch selbstvernetzend oder fremdvernetzend oder thermisch und mit aktinischer Strahlung härtbar sind.

4. Verfahren nach einem der Ansprüche 1 bis 3, **dadurch gekennzeichnet, dass** man die Wasserdampfpermeabilität der farb- und/oder effektgebenden Unideckiackierung oder Wasserbasislackierung bestimmt, indem man in einen Glastiegel einer definierten Öffnung eine bestimmte Menge Wasser einfüllt,
die definierte Öffnung des Glastiegels mit der Unidecklackierung oder Wasserbasislackierung in der Form einer freien Membran einer definierten Dicke haftfest verschließt, überstehende Teile der Membran bündig zum Tiegelrand entfernt, den Glastiegel mit Wasser und Membran auswiegt, bei einer konstanten Temperatur oberhalb der Zimmertemperatur während eines definierten Zeitraums lagert und hiernach den Gewichtsverlust bestimmt.

5. Verfahren nach einem der Ansprüche 1 bis 3, **dadurch gekennzeichnet, dass** man die Wasserdampfpermeabilität nach ASTM F-1249 bestimmt.

6. Verfahren nach einem der Ansprüche 1 bis 5, **dadurch gekennzeichnet, dass** die Unidecklackierungen oder Wasserbasislackierung eine Schichtdicke d > 20µm haben.

7. Verwendung von
(i) hochsiedenden ("langen") organischen Lösemitteln,
(ii) Polyetherpolyolen,
(iii) wässrigen Dispersionen mindestens eines Copolymerisats, herstelltbar, indem in einer wässrigen Dispersion mindestens eines Polyurthenharzes, das ein zahlenmittleres Molekulargewicht Mn von 1000 bis 30.000 Dalton aufweist und im statistischen Mittel pro Molekül 0,05 bis 1,1 polymerisierbare Doppelbindungen enthält, mindestens ein olefinisch ungesättigtes Monomer in Gegenwart mindestens eines wasserunlöslichen Initiators radikalisch polymerisiert wird, wobei das Gewichtsverhältnis zwischen dem Polyurethanharz oder dem Gemisch von Polyurethanharzen und dem olefinisch ungesättigten Monomeren oder dem Gemisch aus olefinisch ungesättigten Monomeren zwischen 1:10 und 10:1 liegt; und/oder von
(iv) wässrigen Dispersionen, herstellbar, indem man eine Mischung aus mindestens einem hydrophoben Polyurethanharz, mindestens einem olefinisch ungesättigten Monomeren, mindestens einer oberflächenaktiven Substanz und Wasser in einem sehr hohen Scherfeld dispergiert und homogenisiert, wodurch stabilisierte Teilchen der genannten Ausgangsverbindungen in der wässrigen Phase resultieren, die olefinisch ungesättigten Monomere innerhalb der Teilchen (co)polymerisiert, wodurch eine Dispersion eines hydrophob modifizierten Kernpolymers resultiert, eine Mischung aus olefinisch ungesättigten Monomeren, enthaltend mindestens ein hydrophiles olefinisch ungesättigtes Monomer, zu der Dispersion des hydrophob modifizierten Kernpolymers hinzugibt und die Monomeren in der Gegenwart des Kernpolymers copolymerisiert, wodurch ein hydrophiles Schalenpolymer resultiert;
in einem Verfahren nach einem der Ansprüche 1 bis 6.zur Einstellung der Wasserdampfpermeabilität in farb- und/oder effektgebenden Unidecklackierungen und Wasserbasislackierungen.

8. Verwendung nach Anspruch 7, **dadurch gekennzeichnet, dass** die farb- und/oder effektgebenden Unidecklackierungen und Wasserbasislackierungen Schichtdicken > 20µm haben.

9. Verwendung nach Anspruch 7 oder 8, **dadurch gekennzeichnet, dass** die farb- und/oder effektgebenden Unidecklackierungen oder Wasserbasislackierungen aus wässrigen Unidecklacken oder Wasserbasislacken auf Basis gesättigter, ungesättigter und/ode mit olefinisch ungesättigten Verbindungen gepfropfter, ionisch und/oder nicht ionisch stabilisierter Polyurethane herstellbar sind.

## Claims

1. Process for producing a colour and/or effect coating system on a primed or unprimed substrate by
(I) applying at least one aqueous colour and/or effect solid-colour topcoat material to the substrate, to give at least one solid-colour topcoat film, and
(II) curing the aqueous solid-colour topcoat film(s), to give a colour and/or effect solid-colour topcoat;
or alternatively by
(I) applying at least one aqueous colour and/or effect basecoat material to the substrate, to give at least one aqueous basecoat film,
(II) flashing off and/or drying the aqueous basecoat film(s), without curing it (them) fully,
(III) applying at least one clearcoat material to the aqueous basecoat film, to give at least one clearcoat film, and
(IV) jointly curing the aqueous basecoat film(s) and the clearcoat film(s), to give a multicoat colour and/or effect coating system;
**characterized in that**
(a) at least one aqueous colour and/or effect solid-colour topcoat material or aqueous colour and/or effect basecoat material is used which contains no metal flake pigments and which after curing gives a colour and/or effect solid-colour topcoat or aqueous basecoat having a water vapour permeability δ_{60°C} >6.0 mg/h · m · bar or δ_{60°C} >286.4 g · µm/m² · d, where d stands for day; or
(b) at least one aqueous effect or colour and effect solid-colour topcoat material or aqueous effect or colour and effect basecoat material is used which comprises metal flake pigments and which after curing gives a colour and/or effect solid-colour topcoat or aqueous basecoat having a water vapour permeability δ_{60°C} >4.0 mg/h · m · bar or δ_{60°C} >190.92 g · 100 µm/m² · d, wherein the water vapour permeability of the colour and/or effect solid-colour topcoat or aqueous basecoat is adjusted by adding
(i) at least one high-boiling ("long") organic solvent, selected from the group encompassing triorganophosphates, in particular trialkyl phosphates and/or tricycloalkyl phosphates such as tripropyl phosphate, tributyl phosphate, triamyl phosphate, trihexyl phosphate or tricyclohexyl phosphate, in particular tributyl phosphate.

2. Process according to Claim 1, **characterized in that** the colour and/or effect aqueous basecoat materials and solid-colour topcoat materials comprise as binder at least one ionically and/or nonionically stabilized polyurethane binder which is saturated, unsaturated and/or grafted with olefinically unsaturated compounds.

3. Process according to Claim 1 or 2, **characterized in that** the aqueous colour and/or effect basecoat and solid-colour topcoat materials are physically curing, thermally self-crosslinking or externally crosslinking or curable thermally and with actinic radiation.

4. Process according to any of Claims 1 to 3, **characterized in that** the water vapour permeability of the colour and/or effect solid-colour topcoat or aqueous basecoat is determined by introducing a certain amount of water into a glass crucible of defined aperture, firmly sealing the defined aperture of the glass crucible with the solid-colour topcoat or aqueous basecoat in the form of a free membrane of defined thickness, removing projecting portions of the membrane to leave said membrane flush with the rim of the crucible, weighing the glass crucible with water and membrane, storing the system at a constant temperature above room temperature for a defined period, and then determining the weight loss.

5. Process according to any of Claims 1 to 3, **characterized in that** the water vapour permeability is determined in accordance with ASTM F - 1249.

6. Process according to any of Claims 1 to 5, **characterized in that** the solid-colour topcoats or aqueous basecoats have a film thickness d > 20 µm.

7. Use of
(i) high-boiling ("long") organic solvents,
(ii) polyetherpolyols,
(iii)aqueous dispersions of at least one copolymer preparable by subjecting at least one olefinically unsaturated monomer to free-radical polymerization in the presence of at least one water-insoluble initiator in an aqueous dispersion of at least one polyurethane resin having a number-average molecular weight Mn of from 1000 to 30,000 daltons and containing on average per molecule from 0.05 to 1.1 polymerizable double bonds, the weight ratio between the polyurethane resin or mixture of polyurethane resins and the olefinically unsaturated monomer or mixture of olefinically unsaturated monomers being between 1:10 and 10:1;
and/or
(iv) aqueous dispersions preparable by dispersing and homogenizing a mixture of at least one hydrophobic polyurethane resin, at least one olefinically unsaturated monomer, at least one surface-active substance, and water in a very high shear field, giving stabilized particles of said starting compounds in the aqueous phase, (co)polymerizing the olefinically unsaturated monomers within these particles, giving a dispersion of a hydrophobically modified core polymer, adding a mixture of olefinically unsaturated monomers including at least one hydrophilic olefinically unsaturated monomer to the dispersion of the hydrophobically modified core polymer, and copolymerizing the monomers in the presence of the core polymer, to give a hydrophilic shell polymer;
in a process according to any of Claims 1 to 6 to adjust the water vapour permeability in colour and/or effect solid-colour topcoats and aqueous basecoats.

8. Use according to Claim 7, **characterized in that** the colour and/or effect solid-colour topcoats and aqueous basecoats have film thicknesses > 20 µm.

9. Use according to Claim 7 or 8, **characterized in that** the colour and/or effect solid-colour topcoats or aqueous basecoats may be produced from aqueous solid-colour topcoat or aqueous basecoat materials based on ionically and/or nonionically stabilized polyurethanes which are saturated, unsaturated and/or grafted with olefinically unsaturated compounds.

## Revendications

1. Procédé de préparation d'une peinture colorante et/ou à effets sur un substrat avec ou sans couche de fond par :
(I) application d'au moins une peinture monocouche aqueuse colorante et/ou à effets sur le substrat dont il résulte au moins une couche de peinture monocouche, et
(II)durcissement de la ou des couches de peinture monocouche aqueuses, dont il résulte une peinture monocouche colorante et/ou à effets;
ou en variante, par :
(I) application d'au moins une peinture à base d'eau colorante et/ou à effets sur le substrat dont il résulte au moins une couche de peinture à base d'eau aqueuse,
(II) aération et/ou séchage de la ou des couches de peinture à base d'eau, sans que celles-ci ne se durcissent totalement,
(III) application d'au moins une couche transparente sur la couche de peinture à base d'eau dont il résulte au moins une couche de peinture transparente, et
(IV) durcissement commun de la ou des couches de peinture à base d'eau et de la ou des couches de peinture transparente, dont il résulte une peinture multicouche colorante et/ou à effets,
**caractérisé en ce que**, dans ce cas :
(a) on utilise au moins une peinture monocouche aqueuse colorante et/ou à effets ou une peinture aqueuse à base d'eau qui ne contient aucun pigment à plaquettes de métal et qui offre, après durcissement, une peinture monocouche ou peinture à base d'eau colorante et/ou à effets qui présente une perméabilité à la vapeur d'eau δ_{60°C} > 6,0 mg/h • m • bar ou δ_{60°C} > 286, 4 g • µm/m² • d, où d représente l'unité de temps Jour; ou
(b) on utilise au moins une peinture aqueuse monocouche ou peinture aqueuse à base d'eau à effets ou colorante et à effets qui contient des pigments à plaquettes de métal et qui offre après durcissement une peinture monocouche ou peinture à base d'eau colorante et/ou à effets qui présente une perméabilité à la vapeur d'eau δ_{60°C} > 4,0 mg/h • m • bar ou δ_{60°C} > 190,92 g • 100 µm/m² • d la perméabilité à la vapeur d'eau des peinture monocouche ou peinture à base d'eau colorantes et/ou à effets étant règlée par addition :
(i) d'au moins un solvant organique à haut point d'ébullition ("long") choisi dans le groupe des triorganophosphates, en particulier les trialkyl- et/ou tricycloalkylphosphates comme le tripropyl-, tributyl-, triamyl-, trihexyl- ou tricyclohexylphosphate, en particulier le tributylphosphate.

2. Procédé selon la revendication 1, **caractérisé en ce que** la peinture à base d'eau et peinture monocouche aqueuses colorantes et/ou à effets contiennent comme liant au moins un polyuréthanne saturé, insaturé et/ou greffé de composés oléfiniquement insaturés et qui est stabilisé par voie ionique et/ou non ionique.

3. Procédé selon la revendication 1 ou 2, **caractérisé en ce que** les peinture à base d'eau et peinture monocouche aqueuses colorantes et/ou à effets sont physiquement durcissables, à autoréticulation thermique ou à réticulation commandée ou durcissables thermiquement et par rayonnement actinique.

4. Procédé selon l'une des revendications 1 à 3, **caractérisé en ce qu'**on détermine la perméabilité à la vapeur d'eau des peinture monocouche ou peinture à base d'eau colorantes et/ou à effets en remplissant un creuset de verre d'une ouverture définie d'une certaine quantité d'eau, en fermant l'ouverture définie du creuset de verre par adhérence avec la peinture monocouche ou peinture à base d'eau sous la forme d'une membrane libre d'une épaisseur définie, en éliminant les parties restantes de la membrane affleurant au bord du creuset, en pesant le creuset de verre avec l'eau et la membrane, en l'entreposant à une température constante qui est supérieure à la température de la pièce pendant une période de temps définie et en déterminant après cela la perte de poids.

5. Procédé selon l'une des revendications 1 à 3, **caractérisé en ce qu'**on détermine la perméabilité à la vapeur d'eau selon la norme ASTM F-1249.

6. Procédé selon l'une des revendications 1 à 5, **caractérisé en ce que** les peintures monocouche et à base d'eau ont une épaisseur de couche d > 20 µm.

7. Utilisation de :
(i) solvants organiques à haut point d'ébullition ("longs");
(ii) de polyétherpolyols;
(iii)de dispersions aqueuses d'au moins un copolymère, qu'on peut préparer en polymérisant par voie radicalaire et dans une dispersion aqueuse d'au moins une résine de polyuréthanne, laquelle présente un poids moléculaire moyen numérique Mn de 1000 à 30000 daltons et contient en moyenne statistique par molécule de 0,05 à 1,1 liaison double polymérisable, au moins un monomère oléfiniquement insaturé en présence d'au moins un initiateur insoluble dans l'eau, le rapport pondéral entre la résine de polyuréthanne ou le mélange de résines de polyuréthanne et le monomère oléfiniquement insaturé ou le mélange composé de monomères oléfiniquement insaturés étant situé entre 1:10 et 10:1;
et/ou
(iv) de dispersions aqueuses, qu'on peut préparer en dispersant un mélange composé d'au moins une résine de polyuréthanne hydrophobe, d'au moins un monomère oléfiniquement insaturé, d'au moins une substance tensioactive et d'eau dans un champ de cisaillement très élevé et en l'homogénéisant, dont il résulte dans la phase aqueuse des particules stabilisées des composés de départ mentionnés, en (co)polymérisant les monomères oléfiniquement insaturés au sein des particules, dont il résulte une dispersion d'un polymère de coeur modifié par voie hydrophobe, en ajoutant à la dispersion du polymère de coeur modifié par voie hydrophobe un mélange composé de monomères oléfiniquement insaturés contenant au moins un monomère hydrophile oléfiniquement insaturé et en copolymérisant les monomères en présence du polymère de coeur, dont il résulte un polymère hydrophile de peau,
dans un procédé selon l'une des revendications 1 à 6, pour le réglage de la perméabilité à la vapeur d'eau des peintures monocouches et peintures à base d'eau colorantes et/ou à effets.

8. Utilisation selon la revendication 7, **caractérisée en ce que** les peintures monocouches et peintures à base d'eau colorantes et/ou à effets ont des épaisseurs de couche > 20 µm.

9. Utilisation selon la revendication 7 ou 8, **caractérisée en ce que** les peintures monocouches ou peintures à base d'eau colorantes et/ou à effets peuvent être préparées à partir de peintures aqueuses monocouches ou de peintures à base d'eau à base de polyuréthannes saturés, insaturés, stabilisés par voie ionique et/ou non ionique et greffés de composés oléfiniquement insaturés.
